# EUROPEAN PATENT SPECIFICATION

(11) **EP 1 537 687 B1**
(45) Date of publication and mention of the grant of the patent: **24.08.2011**
(21) Application number: 03749439.0
(22) Date of filing: 05.09.2003
(51) Int. Cl.: H04B 7/185, H04W 36/18

(54) **SYSTEM AND METHOD FOR MANAGING COMMUNICATIONS WITH MOBILE PLATFORMS OPERATING WITHIN A PREDEFINED GEOGRAPHIC AREA**
VERFAHREN UND SYSTEM ZUR VERWALTUNG VON KOMMUNIKATIONEN MIT MOBILEN PLATTFORMEN IN EINEM VORBESTIMMTEN GEOGRAPHISCHEN GEBIET
SYSTEME ET PROCEDE DE GESTION DE COMMUNICATIONS AVEC DES PLATEFORMES MOBILES FONCTIONNANT A L'INTERIEUR D'UNE ZONE GEOGRAPHIQUE PREDEFINIE

(30) Priority: 06.09.2002 US 408846 P; 09.09.2002 US 409335 P
(43) Date of publication of application: 08.06.2005
(73) Proprietor: The Boeing Company, Seattle, WA 98124-2207 (US)
(72) Inventor: HORTON, Edwin, T., Jr., Wildwood, MO 63011-1707 (US); MITCHELL, Timothy, M., Seattle, WA 98116-4313 (US); CAVANAUGH, Wayne, F., Kent, WA 98031-6544 (US)
(74) Representative: Land, Addick Adrianus Gosling
(86) International application number: PCT/US2003/027799
(87) International publication number: WO 2004/023677

(56) References cited:
- EP-A- 1 081 974
- GB-A- 2 271 486
- US-B1- 6 384 783

## Description

### FIELD OF THE INVENTION

The present invention generally relates to systems and methods for data transmission. In particular, the present invention relates to RF data transmission between mobile platforms, such as aircraft, and a plurality of antenna subsystems located at a controlled area, such as at an airfield, to more efficiently utilize the capacity of the antenna substations.

### BACKGROUND OF THE INVENTION

In conventional wireless network architectures, the radio frequency (RF) connections made between mobile platforms, such as aircraft, and particular RF communication access points disposed about a controlled area, such as at an airfield, is typically accomplished using very high frequency "line-of-sight" transmissions for modulating data between the aircraft and a ground-based control center in communication with the aircraft. Typically, frequencies in the range of about 2 GHz to about 6 GHz are employed for this purpose. Transmissions at such high frequencies facilitate extremely robust data transmission rates and provide excellent bandwidth for transmitting very large amounts of data very quickly between the aircraft and the ground-based control center. Such high frequency, line-of-sight transmissions are often handled in accordance with well known 802.11 a or 802.11 b communications protocols.

However, a drawback with the use of such high frequency RF transmissions is the limited distance over which such signals may be transmitted. Typically, this distance is about 1000 yards (910 meters) or less for such systems employed at airfields. Thus, when implementing a wireless, high frequency communications system at a controlled area such as an airport or airfield, where runways and taxiways may extend for significant distances and therefore define a relatively large, controlled area, a plurality of antenna substations must be employed. The antenna substations that are intended to communication with the aircraft as the aircraft taxis about the airfield, or is parked at various areas at the airfield for short or long periods, must be sufficient in number and strategically located at those areas around the airfield to ensure that communications can be maintained with an aircraft at all times during which the aircraft is present at the airfield.

With present day airfield traffic management systems the access to the antenna substations is also un-managed. By "un-managed", it is meant that the decision as to which antenna substation a particular aircraft should communicate which is based upon which antenna substation provides the strongest RF signal to the aircraft, as detected by the RF equipment carried by the aircraft. During situations where many aircraft are accessing the antenna substations simultaneously, this may result in some antenna substations being utilized to capacity while others with a similar coverage area are underutilized, thus leading to network bottlenecks and inefficiency in the communications with the aircraft operating at the airfield or airport. An underlying cause of this problem is the lack of knowledge about each aircraft's position, travel direction and speed, as well as a lack of consideration of the location, antenna type, orientation, and coverage area of the antenna substations.

An additional problem with un-managed, wireless communications systems for managing communications between aircraft and a ground based communications network stems from the transmission delay experienced when the network transfers an aircraft from one antenna substation to another at the airfield. Such delays are often experienced in signal strength based networks as such networks often transfer communications from one antenna substation to another due to the natural signal strength fluctuations experienced with RF transmissions. This can lead to frequent transfers of communication between the aircraft and various antenna substations at the airfield as the aircraft taxies about the airfield. This, in turn, can produce frequent delays in passing important data from the ground based network to the aircraft. With present day systems that rely on signal strength as the means for selecting a particular antenna substation to communicate with, natural signal strength fluctuations can result in the aircraft making and breaking RF connections many times in a very short time period, even while the aircraft is parked at an airfield. This is because with some existing systems at certain airports, an aircraft would be able to detect a beacon signal from several antenna substations simultaneously. The naturally varying signal strengths will prompt the RF communications system on the aircraft to repeatedly make and break communications links with various antenna substations in an effort to maintain communication with the substation providing the strongest beacon signal. Since each interruption in communication can represent a time period of one or more seconds, a large of amount of data transmitted to the aircraft can be lost each time an interruption in the communications link with an aircraft occurs.

Thus, there exists a need for an improved airport traffic management system that is capable of monitoring communications with a large number of aircraft on the ground at an airport and determining the optimal antenna substation to be used by each aircraft, in real time fashion, to even more efficiently manage communications between parked or taxing aircraft at an airport and a ground-based central data network. Specifically, there is a need for a communications system that is able to determine the optimal access point to be used by ground based aircraft, which is not limited to the consideration of the signal strength of received RF beacon signals by the aircraft's RF communications system. This would reduce the frequency of changes by the aircraft in the specific access point with which it is communicating, and therefore reduce the number of instances where communication is lost between the ground based aircraft and the central data network due to the initiation of a new communications link with a different access point. Further, there is a need for a communications system that can monitor and manage the number of aircraft that are communicating with a given access point at a given time to eliminate network bottlenecks and network inefficiencies.

Document GB2271486 discloses a system for managing communication between a mobile and a communications station comprising: a control system for managing communications; a plurality of antennas located at spaced apart locations, each of said antennas being in communication with said control system; and wherein said control system uses the location, speed and direction of said mobile to inform said mobile as to which one of said antennas to communicate with to maintain a communications link between said mobile and said control system while reducing a frequency with which said mobile is required to switch between different ones of said antennas.

### SUMMARY OF THE INVENTION

The present invention overcomes the deficiencies of the prior art by providing an improved communications system for use in a controlled environment, such as within an airfield, between a mobile platform, such as an aircraft, and a centralized ground communications network, such as an airport central data network located at an airport or airfield. Specifically, the present invention provides for a control computer that selects the optimal antenna substation for the aircraft to communicate with from a plurality of antenna substations located about the airfield. The decision as to which antenna substation to select is based in part upon the directional heading of the aircraft that is determined using Global Positioning System (GPS) information from GPS satellites, and based in part upon the RF traffic being handled (i.e., loading) of each particular antenna substation. Determining the optimal antenna substation for the aircraft to communicate with based on the directional heading of the aircraft and upon the present usage of the different antenna substations is advantageous as it decreases the number of times that the aircraft must initiate a new connection with a different antenna substation. It also decreases the transmission interruptions experienced due to the initiation of new RF connections.

In an alternative preferred embodiment, the aircraft's position at an airfield at any given time is determined by multi-lateration techniques instead of by GPS information. Positional information concerning the aircraft is then used, together with additional information concerning the direction of travel of a moving aircraft and its speed, by a control computer to determine the appropriate access point for a given aircraft.

Further areas of applicability of the present invention will become apparent from the detailed description provided hereinafter. It should be understood that the detailed description and specific examples, are
intended for purposes of illustration only and are not intended to limit the scope of the invention.

### BRIEF DESCRIPTION OF THE DRAWINGS

The present invention will become more fully understood from the detailed description and the accompanying drawings, wherein:

Figure 1 is a block diagram generally illustrating a communications system of the present invention, and specifically illustrating an aircraft component and a ground based component, and where the ground based component includes a plurality of antenna substations disposed about an airfield that are used to provide communication between the aircraft and a central data network;

Figure 2 is a top view of a portion of an airfield at which the communications system of Figure 1 may be used; and

Figure 3 is a flow chart-like illustration of the communication steps performed by a control computer and the aircraft component of Figure 1, and the interaction between the control computer and the aircraft component in establishing a communications link.

### DETAILED DESCRIPTION OF THE PREFERRED EMBODIMENTS

The following description of the preferred embodiments is merely exemplary in nature and is in no way intended to limit the invention, its application, or uses.

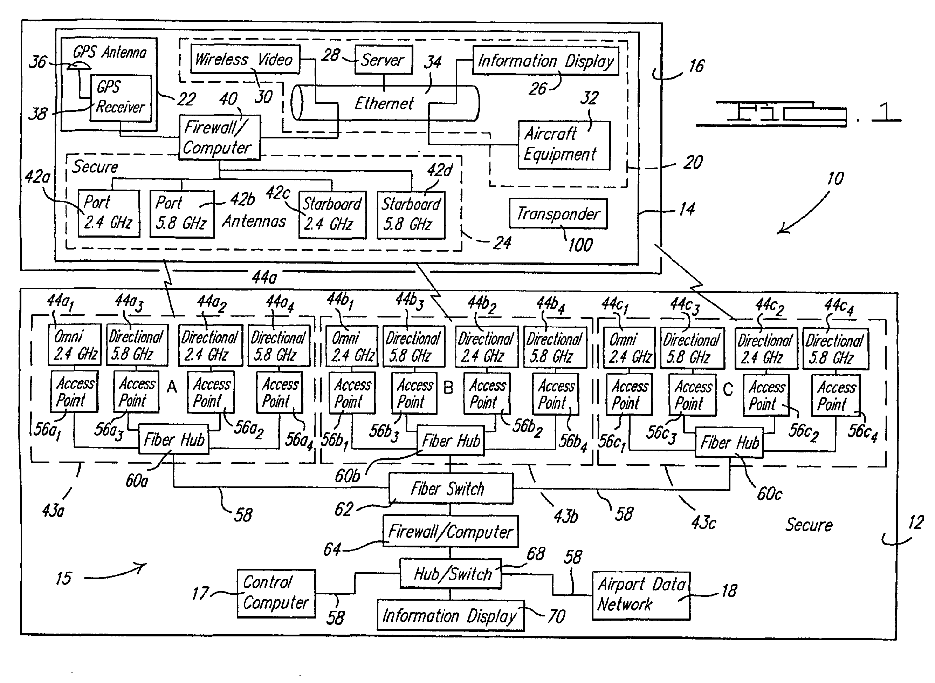

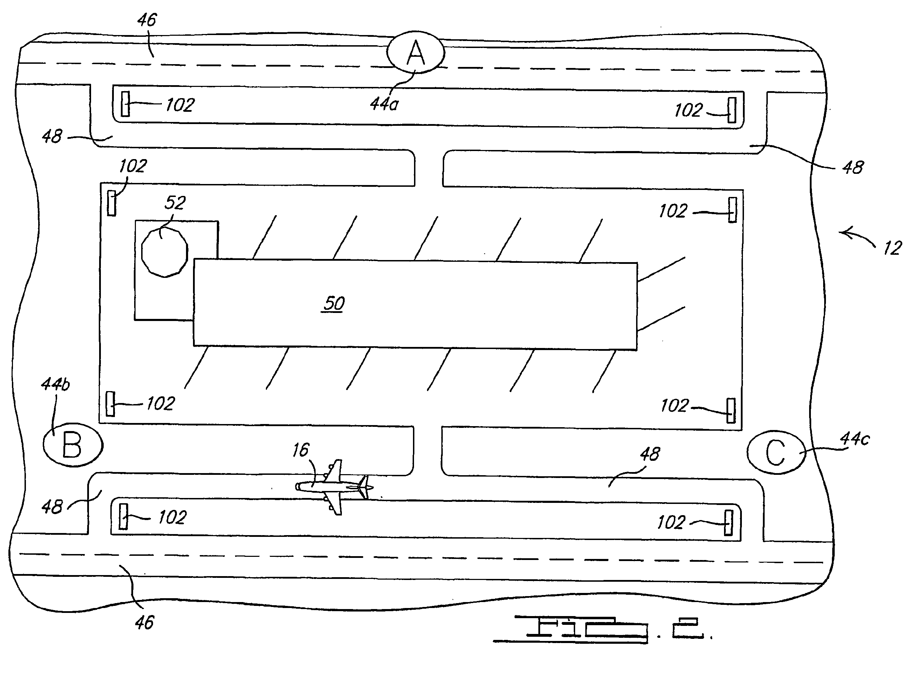

With initial reference to Figure 1, a communications system in accordance with a preferred embodiment of the present invention is generally illustrated at 10. The communications system 10 is used in a controlled environment such as at an airfield 12. The system 10 includes an aircraft communications component 14 located onboard a mobile platform such as an aircraft 16 (Figure 2), and a ground based component 15. The ground based component 15 includes a control computer 17. The ground based component 15 provides communication between the aircraft communications component 14 and a remote data network 18, which may be part of the ground based component 15 or that may be a separate system accessed by the system 10. While the following description focuses on the application of communications system 10 to an airfield 12 with an aircraft component 14 of an aircraft 16, it will be appreciated that the system 10 may be used in any controlled environment where a plurality of mobile platforms (e.g. motor vehicles, ships, etc.) need to simultaneously access a plurality of communications substations at a controlled area. Thus the description of the mobile platforms as aircraft 16 is only exemplary and the present invention is not limited to use only with aircraft operating within the confines of an airfield.

The aircraft communications component 14 will now be described in greater detail. The aircraft communications component 14 is generally comprised of an aircraft data network 20, a device for determining the location and heading of the aircraft 16 such as a global positioning systems (GPS) 22, and an antenna array 24. The aircraft data network 20 represents components that are pre-existing on each aircraft 16. The network 20 is comprised of an information display 26, a server 28, a video device 30 (possible as a wireless video device), and various other types of aircraft equipment 32. The different components of the data network 20 are interconnected through a local area network connection such as an Ethernet connection 34.

The GPS 22 determines the location and heading of the aircraft 16 through communication with navigation satellites (not shown) using GPS antenna 36. The navigation information received from the navigation satellites is received and processed by a GPS receiver 38.

The navigation information of the GPS 22 and the data from the aircraft data network 20 is prepared for transmission and encrypted by firewall/computer subsystem 40. The firewall/computer subsystem 40 may comprise any suitable computer system which includes an encryption device capable of encrypting data to allow the data to be transmitted with a suitable degree of security.

The antenna array 24 may comprise any suitable number and types of RF antennas, but in one preferred form is comprised of four separate RF antennas 42. It will be appreciated, however, that the aircraft communications component 14 could incorporate only a single RF antenna. Providing a plurality of antennas 42, however, provides added flexibility to the system 10.

The antennas 42 include a 2.4 GHz port side antenna 42a, a 5.8 GHz port side antenna 42b, a 2.4 GHz starboard side antenna 42c, and a 5.8 GHz starboard side antenna 42d. Port side antennas 42a and 42b are located toward the port side of the exterior of the aircraft 16 while starboard antennas 42c and 42d are located on an exterior surface toward the starboard side of the aircraft. The use of antennas for operating at two different frequencies further ensures that if RF traffic on one frequency is very high, that a second frequency is available for use.

The antenna array 24 transmits the encrypted data of the GPS 22 from the aircraft component 14 to the control computer 18 by way of a series of antenna substations 43a, 43b and 43c. Each antenna substation 43 includes an antenna array 44 that is located at a predetermined location at the airfield 12. The encrypted data may be transmitted in a variety of different formats but is preferably transmitted using well known 802.11 a or 802.11 b protocols. The data from the aircraft data network 20 may also be transferred via antenna array 24, however, the transmission of data from the aircraft data network 20 is not the principal purpose for the invention.

In Figure 2, the antenna substations 43 are illustrated at various predetermined locations at the airfield 12. The airfield 12 is comprised of at least one runway 46, at least one taxiway 48, a terminal 50, and a control tower 52. While Figures 1 and 2 illustrate three antenna substations 43a, 43b, and 43c, it must be realized that any suitable plurality of antenna substations 43 may be incorporated. The antenna substations 43 are located about the airfield 12 at those locations sufficient to provide communication with an aircraft at any area where the aircraft might be required to taxi or might be parked.

All of the antenna substations 43 transmit a "beacon" signal from their respective antenna array 44 that identifies the source of the beacon signal and an SSID (Service Set Identification), which is a unique identifier exclusive to the system 10. Antenna arrays 44 in close proximity are on different frequencies to further help prevent self jamming. The aircraft data network 20 knows the SSID and scans the frequencies associated with the antenna arrays 44 looking for a beacon signal. If it detects only one, then it will commence communications at that frequency and with that particular antenna array 44 associated with the received beacon signal. If it detects more that one beacon signal, then the signal having a stronger received signal strength will be selected and locked onto by the aircraft data network 20.

As seen in Figure 1, each antenna array 44a, 44b and 44c is preferably comprised of at least four antennas. Antenna array 44a includes an omnidirectional antenna 44a₁ tuned to 2.4 GHz, a 2.4 GHz directional antenna 44a₂, and two 5.8 GHz directional antennas 44a₃ and 44a₄. Antenna arrays 44b and 44c similarly include antennas 44b₁-44b₄ and 44c₁-44c₄, respectively. Each antenna of each antenna array 44 is coupled to one of a plurality of access points 56. Thus, antennas 44a₁-44a₄ are coupled to access points 56a₁-56a₄. Antennas 44b₁-44b₄ are similarly coupled to access points 56b₁-56b₄, and antennas 44c₁-44c₄ are similarly coupled to access points 56c₁-56c₄. The access points 56 form RF transceivers that convert the received RF data to electrical signals suitable for transmission through a landbased transmission line. Preferably, the received data is converted to a suitable IP protocol to permit transmission through fiber optic lines 58.

The directional antennas 44a₂-44a₄, 44b₂-44b₄ and 44c₂-44c₄ are used to beam RF signals down the runway 46 and taxiway 48. Accordingly, the various ones of these directional antennas are orientated so that their beams are directed away from each other, and more preferably such that the antennas of array 44a transmit beams at 180 degrees from one another (i.e., in opposite directions) along runway 46. The directional antennas of arrays 44b and 44c are similarly positioned to cover the full length of taxiway 48. The omnidirectional antenna 44a₁, 44b₁ and 44c₁ of each antenna array 44 is used to serve areas not covered by its associated directional antennas. The use of directional antennas 44a₂-44a₄, 44b₂-44b₄ and 44c₂-44c₄ provide greater range and help to reduce self jamming. Self jamming is reduced because the RF signal from one of the directional antennas 44a₂-44a₄, 44b₂-44b₄ and 44c₂-44c₄ is reduced in level when received by the other one of the adjacent directional antennas. This is because of the signal rejection characteristics of each of the directional antennas. This effectively improves the signal-to-jamming margin of each directional antenna.

Each antenna of antenna arrays 44a, 44b and 44c is in communication with an associated fiber hub 60a, 60b and 60c. The fiber hubs 60 are in turn coupled to a fiber switch 62. The data received by fiber switch 62 is de-crypted by any suitable data de-crypting device, such as a firewall/computer subsystem 64. The data is transferred to and from firewall/computer subsystem 64 preferably using fiber optic lines 58. Firewall/computer subsystem 64 also performs an authentication of each aircraft 16 accessing the ground based component 15 to thus control access by the aircraft to the system 10. It will be appreciated that while fiber optics are utilized to handle the transmission of data between the antenna substations 43 and the fiber switch 62, that other suitable data transmission means could be incorporated in lieu of a fiber optic system.

From the firewall/computer subsystem 64, the received data is directed to various subsystems by a hub or switch 68. The subsystems in receipt of the received data preferably include the control computer 17, the airport data network 18, and an information display 70 for visually displaying various operational parameters of the system 10, such as the location and heading of the aircraft 16 and which antenna array 44 the aircraft 16 is in communication with. While the control computer 17 is illustrated as being separate from the airport data network 18, it should be realized that the control computer 17 may be part of the airport data network 18. The control computer 17, information display 70, and airport data network 18 are interconnected by fiber optic lines 58 or any other suitable signal transmission means.

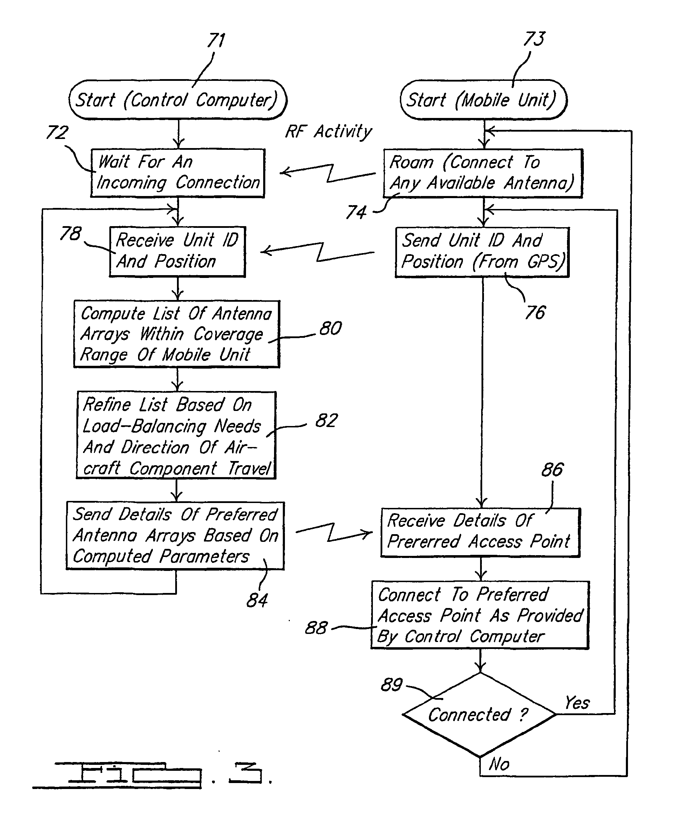

The decision as to which antenna substation 43 aircraft communications component 14 is to connect with in order to communicate with the airport data network 18 is made by control computer 17. The use of control computer 17 to determine which antenna substation 43 the aircraft communications component 14 is to communicate with will now be described in detail. As illustrated in Figure 3, the control computer 17 is activated at step 71 and waits to receive an incoming data signal from aircraft communications component 14 of a given aircraft 16, as shown at step 72. Once aircraft communications component 14 is activated at step 73, the aircraft communications component 14 performs a roaming operation at step 74 to detect a beacon signal from any one of the antenna arrays 44a,44b,44c. Once it detects such a signal it establishes a communications link with the antenna substation 43a, 43b,43c providing the beacon signal, and then makes a connection with the control computer 17, as shown at step 72.

After the aircraft communications component 14 connects with one of the antenna arrays 44a,44b,44c, the aircraft component 14 transmits a unit identification number (e.g., a tail number) and its position, as determined by GPS 22, to the control computer 17, at step 76. Alternatively, multi-lateration could be used in place of a GPS system to determine the position of the aircraft 16. This position detecting technique will be discussed in connection with an alternative preferred embodiment of the invention.

The unit identification number and position data are received by the control computer at step 78. Once the control computer 17 receives the identification number and position data at step 78, and authenticates the aircraft 16 as an aircraft authorized to access the system 10, the control computer 17 computes a list of antenna arrays 44 that are within the coverage range of the aircraft communications component 14, as at step 80. The list of antenna arrays 44 that is generated by the control computer 17 is modified at step 82 based on antenna array load balancing considerations and the direction of travel of the aircraft 16 to determine the optimal antenna array 44 with which aircraft 16 is to communicate with. For example, Figure 2 illustrates aircraft 16 as being closest to antenna array 44b. However, if antenna array 44a is presently operating at capacity with respect to the number of aircraft it is in communication with, then the control computer 17 will select a different antenna array 44 which represents the next optimal antenna array. Further, if the aircraft 16 is closest to antenna array 44b but the data from the GPS 22 indicates that the aircraft 16 is traveling away from the antenna array 44b of antenna substation 43b and toward the antenna array 44c of substation 43c, the control computer 17 will select antenna array 44c as the optimal antenna array 44 for the aircraft component 14 to communicate with. This is done to minimize the number of times that the aircraft component 14 must initiate a new connection with antenna arrays 44 as the aircraft traverses the airfield 12, and thus minimize the communication delays associated with establishing new communications links.

Once the optimal antenna array 44 is selected by control computer 17, the details of the optimal antenna array 44 are transmitted to the aircraft communications component 14 at step 84 and received by the aircraft communications component 14 at step 86. The aircraft communications component 14 connects to the optimal antenna array 44 as indicated at step 88. If the aircraft communications component 14 successfully connects to the antenna array 44 selected by the control computer 17 at step 89, the operation of the aircraft communications component 14 proceeds to step 76. At this step the unit identification number and the heading of aircraft 16 are again transmitted to the control computer 17 to allow the control computer 17 to continuously update its decision as to which antenna array 44 is the optimal antenna array for the aircraft 16 to communicate with. If the aircraft communications component 14 is unable to connect to the preferred antenna array 44 at step 89 the operation of the aircraft component 14 proceeds to step 74 where the aircraft communications component 14 of the aircraft 16 connects with any available antenna array 44 until the component 14 is able to connect to the optimal antenna array 44 as selected by control computer 17.

An additional advantage to using "sectorized" (i.e., spaced apart) antennas is that it allows a system to be designed with a near optimum frequency plan incorporating frequency reuse. Since omnidirectional antennas transmit in all directions, a frequency can be reused at a different antenna station only if the distance between the omnidirectional antennas is great enough to avoid interference. Sectored antennas restrict the RF pattern, so frequency reuse in close proximity is possible as long as it is in a sector that does not overlap with a sector on the same frequency.

In an alternative preferred embodiment, the technique of multi-lateration is used to provide the needed positional information of each aircraft 16 located at an aircraft. In this embodiment, the aircraft 16 includes an RF transponder 100 as part of its communications component 14, as shown in Figure 1. It will be appreciated that when multi-lateration is used, the GPS subsystem 22 will not be required.

Briefly, and with reference to Figure 2, multi-lateration is a well known technique involving the use of multiple, non-rotating RF receivers 102 disposed at various locations about the airfield 16. The RF receivers 102 are used to capture pulses being transmitted from the RF transponder 100 of each aircraft 16. From these pulses, an external processing system associated with the RF receivers 102 extrapolates the position of the aircraft 16 at any given instant. Multi-lateration differs from a GPS based system because a GPS based system uses a single receiver (i.e., on the aircraft 16) to capture signals transmitted from a plurality of widely spaced satellites. One manufacturer of a multi-lateration system suitable for use with the present invention is Senesis Corporation of DeWitt, NY. The receivers 102 could be located at the antenna substations 15 or at other areas about the airfield 12. Since they are physically small components, they are easily mounted on other support structures or pre-existing buildings at the airfield 12. The resolution of the position information extrapolated from the receivers 102 is limited principally by the number of receivers. 102 employed. Accordingly, the greater the number of receivers 102 located about the airfield 12 the greater the precision with which each aircraft's 16 location can be pinpointed at any given time.

Thus, the present invention discloses an improved communications system 10 for providing communications in a controlled environment, such as within the airfield 12, between a mobile unit, such as the aircraft component 14 of aircraft 16, and a remote network, such as the airport data network 18. Specifically, the present invention provides for a control computer 17 that selects the optimal antenna substation 43 from a plurality of antenna substations disposed about an airfield for the aircraft 16 to communicate with. This determination is based in part upon the position, direction of travel and speed of the aircraft 16, calculated using suitable position information, and in part upon the current load (i.e., number of aircraft) being handled by each antenna substation 43. Determining the optimal antenna substation 43 for aircraft component 14 to communicate with based on the directional heading of the aircraft 16 and the real time usage of each antenna substation 43 is advantageous as it decreases the number of times that aircraft communications component 14 must initiate communication with a new antenna array 44, and thus decreases the transmission interruptions experienced due to the creation of new connections.

The description of the invention is merely exemplary in nature and, thus, variations that do not depart from the gist of the invention are intended to be within the scope of the invention. Such variations are not to be regarded as a departure from the scope of the invention.

## Claims

1. A system for managing communication between an aircraft operating within an airfield and a communications station, the system comprising:
a control system for managing communications within said airfield;
a mobile platform communications component located on said aircraft for communicating with said control system;
a plurality of antennas located at spaced apart locations within or adjacent to said airfield, each of said antennas being in communication with said control system; and
wherein said control system is adapted to use an operating characteristic of said aircraft as said aircraft operates within said airfield to inform said aircraft as to which one of said antennas to communicate with to maintain a communications link between said aircraft and said control system while reducing a frequency with which said aircraft is required to switch between different ones of said antennas as said aircraft moves within said airfield.

2. The system of claim 1, wherein said operating characteristic comprises real time position information of said aircraft.

3. The system of claim 1 or 2 comprising:
at least one antenna located on said aircraft; and
a ground based component including:
said plurality of antennas located at spaced apart locations within or adjacent to said airfield; and
said control system in communication with said antennas;
wherein said control system analyzes location information received by at least one of said antennas and selects a specific antenna which said mobile platform communications component is to use for communicating with a network disposed at said airfield, said selection being made based at least in part on real-time location information for said aircraft.

4. The system of claim 3, wherein said location information is provided to said control system by said aircraft.

5. The system of claim 3 or 4, wherein said location information is derived by said control system through multi-lateration techniques wherein RF receivers are used to capture pulses being transmitted from a RF transponder of an aircraft.

6. The system of claim 3, 4 or 5, wherein said location information is derived from Global Positioning Satellite information and supplied to said control system by said mobile platform communications component.

7. The system of any of claims 3-6, wherein said selection is further made in consideration of a loading of at least a pair of said antennas.

8. The system of any of claims 1-7, wherein each said antenna comprises an antenna substation comprised of at least one directional antenna and an omni directional antenna.

9. The system of any of claims 3-8, wherein said ground based component further includes a hub for facilitating communication between said antennas and said control system.

10. The system of any of claims 3-9, wherein each said antenna transmits a unique beacon signal, and wherein said mobile platform communications component initially selects one of said beacon signals having the strongest signal strength to establish a communications link with said ground based component.

11. The system of any of claims 3-9, wherein said control system uses information related to a direction of travel of said aircraft to make said selection.

12. The system according to claim 3, wherein said control system uses said location information and a direction of travel of said aircraft to determine which of said antennas to communicate with and to instruct said aircraft to switch from one of said antennas to another in a manner to minimize a number of changes between said antennas while said aircraft travels within said airfield, and while maintaining an optimal RF communications link between said aircraft and said ground based component.

13. The system of any of claims 1-12, wherein said aircraft includes first and second RF antennas each operating at a different frequency.

14. The system of any of claims 1-13, wherein each said antenna comprises an antenna substation comprised of first and second antennas operating at different frequencies.

15. The system of any of claims 1-14, wherein a speed of travel of the aircraft is used by the control system.

16. The system of any of claims 1-15, wherein at least one of said antennas is used to inform said aircraft as to which specific one of said antennas to communicate to switch to using.

17. The system of any of claims 8-16, wherein said directional antennas of said antenna substations are directed such that an associated antenna beam of each is directed away from one another.

18. The system of any of claims 1-17, wherein each said antenna transmits a beacon signal identifying it to said communications component.

19. A method for managing communication between an aircraft operating within an airfield and a communications station, the method comprising:
using a control system for managing communications within said airfield;
using a mobile platform communications component located on said aircraft for communicating with said control system;
using a plurality of ground-based antenna stations at spaced apart locations within or adjacent to said airfield for communicating with said control system;
said control system using an operating characteristic of said aircraft as said aircraft operates within said airfield to inform said aircraft as to which one of said antenna stations to communicate with to maintain a communications link between said aircraft and said control system while reducing a frequency with which said aircraft is required to switch between different ones of said antenna stations as said aircraft moves within said airfield.

20. The method according to claim 19, further comprising:
a) using the plurality of ground-based antenna stations, each disposed at fixed locations within the airfield area, to each transmit an identification;
b) using a communications component located on said aircraft to receive said beacon signals and to select an initial one of said antenna stations to establish a communications link with said control system as said aircraft operates within said airfield region;
c) using said control system to communicate with each of said antenna stations and to monitor at least one of speed of travel and direction of travel of said aircraft within said airfield region;
d) using said control system to analyze information obtained at step c) to determine when said aircraft should switch from communicating with said initial one of said antenna stations to a different one of said antenna stations to maintain an optimal communications link while moving within said airfield region; and
e) instructing said communications component, in real time, as to which one of said antenna stations to use to maintain said communications link in a manner which reduces a frequency with which said communications component is required to switch from one said antenna station to another.

21. The method according to claim 19, further comprising:
using at least one of the ground-based antenna stations to transmit an identifying signal;
using the communications component located on said aircraft to receive said identifying signal and to establish a communications link with said control system via said one of said antenna stations as said aircraft travels within said airfield region;
using said control system to analyze position information relating to said aircraft as said aircraft moves within said airfield area;
using said control system to determine when said communications component should switch from said one antenna station to a different one of said antenna stations to maintain an optimal communications link with said communications component while minimizing a number of times that switching between different ones of said antenna stations occurs; and
using the control system to inform said communications component, via at least one of said antenna stations, which of said antenna stations to switch to so as to maintain said communications link.

22. The method of claim 20 or 21, wherein a system according to any of claims 1-18 is used.

23. The method of claim 20 or 21, wherein said control system uses multi-lateration to periodically determine at least an approximate direction of travel of said aircraft.

## Patentansprüche

1. System zur Verwaltung von Kommunikation zwischen einem Luftfahrzeug, das innerhalb eines Flugplatzes in Betrieb ist, und einer Kommunikationsstation, wobei das System umfasst:
ein Kontrollsystem zur Verwaltung von Kommunikationen innerhalb des Flugplatzes;
eine auf dem Luftfahrtzeug befindliche Mobilplattform-Kommunikationskomponente zum Kommunizieren mit dem Kontrollsystem;
eine Mehrzahl von Antennen, die sich an voneinander beabstandeten Stellen innerhalb des Flugplatzes oder angrenzend an diesen befinden, wobei jede der Antennen in Kommunikation mit dem Kontrollsystem ist; und
wobei das Kontrollsystem angepasst ist, um eine Betriebscharakteristik des Luftfahrzeugs, während das Luftfahrzeug innerhalb des Flugplatzes in Betrieb ist, zu nutzen, um das Luftfahrzeug zu informieren, mit welcher der Antennen es kommunizieren soll, um eine Kommunikationsverbindung zwischen dem Luftfahrzeug und dem Kontrollsystem aufrechtzuerhalten, bei gleichzeitiger Verringerung einer Häufigkeit, mit der das Luftfahrzeug zwischen verschiedenen der Antennen umschalten muss, während sich das Luftfahrzeug innerhalb des Flugplatzes bewegt.

2. System nach Anspruch 1, wobei die Betriebscharakteristik Echtzeitpositionsinformationen des Luftfahrzeugs umfasst.

3. System nach Anspruch 1 oder 2, umfassend:
zumindest eine auf dem Luftfahrzeug befindliche Antenne; und
eine bodengebundene Komponente beinhaltend:
die Mehrzahl von Antennen, die sich an voneinander beabstandeten Stellen innerhalb des Flugplatzes oder angrenzend an diesen befinden; und
der Kontrollsystem der in Kommunikation mit den Antennen ist;
wobei das Kontrollsystem von zumindest einer der Antennen empfangene Positionsinformationen analysiert und eine bestimmte Antenne auswählt, die die Mobilplattform-Kommunikationskomponente zum Kommunizieren mit einem am Flugplatz angeordneten Netzwerk verwenden soll, wobei die Auswahl zumindest teilweise auf Grundlage von Echtzeitpositionsinformationen für das Luftfahrzeug vorgenommen wird.

4. System nach Anspruch 3, wobei dem Kontrollsystem die Positionsinformationen vom Luftfahrzeug zur Verfügung gestellt werden.

5. System nach Anspruch 3 oder 4, wobei die Positionsinformationen vom Kontrollsystem durch Multilaterationsverfahren abgeleitet werden, wobei Funkfrequenz- bzw. RF-Receiver eingesetzt werden, um Impulse zu erfassen, die aus einem Funkfrequenz- bzw. RF-Transponder eines Luftfahrzeugs gesendet werden.

6. System nach Anspruch 3, 4 oder 5, wobei die Positionsinformationen aus Informationen von Satelliten zur globalen Positionsbestimmung abgeleitet werden und dem Kontrollsystem von der Mobilplattform-Kommunikationskomponente zugeführt werden.

7. System nach einem der Ansprüche 3 - 6, wobei die Auswahl weiterhin unter Berücksichtigung einer Belastung zumindest eines Paars der Antennen getroffen wird.

8. System nach einem der Ansprüche 1 - 7, wobei jede Antenne eine Antennensubstation umfasst, die sich aus zumindest einer Richtantenne und einer Rundstrahlantenne zusammensetzt.

9. System nach einem der Ansprüche 3 - 8, wobei die bodengebundene Komponente weiterhin einen Hub zur Erleichterung von Kommunikation zwischen den Antennen und dem Kontrollsystem beinhaltet.

10. System nach einem der Ansprüche 3 - 9, wobei jede Antenne ein eindeutiges Bakensignal sendet, und wobei die Mobilplattform-Kommunikationskomponente zunächst eines der Bakensignale, mit der größten Signalstärke, auswählt, um eine Kommunikationsverbindung mit der bodengebundenen Komponente herzustellen.

11. System nach einem der Ansprüche 3 - 9, wobei das Kontrollsystem sich auf eine Fortbewegungsrichtung dem Luftfahrzeug beziehende Informationen verwendet, um die Auswahl vorzunehmen.

12. System nach Anspruch 3, wobei das Kontrollsystem die Positionsinformationen und eine Fortbewegungsrichtung des Luftfahrzeugs verwendet, um zu bestimmen, mit welcher der Antennen kommuniziert werden soll, und um das Luftfahrzeug anzuweisen, von einer der Antennen zu einer anderen so umzuschalten, dass eine Anzahl von Wechseln zwischen den Antennen minimiert wird, während sich das Luftfahrzeug innerhalb des Flugplatzes fortbewegt, und während gleichzeitig eine optimale HF-Kommunikationsverbindung zwischen dem Luftfahrzeug und der bodengebundenen Komponente aufrechterhalten wird.

13. System nach einem der Ansprüche 1 - 12, wobei das Luftfahrzeug eine erste und eine zweite HF-Antenne beinhaltet, die jeweils mit einer anderen Frequenz arbeiten.

14. System nach einem der Ansprüche 1 - 13, wobei jede Antenne eine Antennensubstation umfasst, die eine erste und eine zweite Antenne beinhaltet, die mit unterschiedlichen Frequenzen arbeiten.

15. System nach einem der Ansprüche 1 - 14, wobei vom Kontrollsystem eine Fortbewegungsgeschwindigkeit dem Luftfahrzeug verwendet wird.

16. System nach einem der Ansprüche 1 - 15, wobei zumindest eine der Antennen eingesetzt wird, um das Luftfahrzeug zu informieren, zu welcher bestimmten der Antennen zum Kommunizieren sie zwecks Verwendung umschalten soll.

17. System nach einem der Ansprüche 8 - 16, wobei die Richtantennen der Antennensubstationen so ausgerichtet sind, dass ein jeweils zugehöriger Antennenstrahl von den anderen weg gerichtet ist.

18. System nach einem der Ansprüche 1 - 17, wobei jede Antenne ein Bakensignal sendet, das sie gegenüber der Kommunikationskomponente identifiziert.

19. Verfahren zur Verwaltung von Kommunikation zwischen einem Luftfahrzeug, das innerhalb eines Flugplatzes in Betrieb ist, und einer Kommunikationsstation, wobei das Verfahren umfasst:
Verwenden eines Kontrollsystems zur Verwaltung von Kommunikationen innerhalb des Flugplatzes;
Verwenden einer auf dem Luftfahrzeug befindlichen Mobilplattform-Kommunikationskomponente zum Kommunizieren mit dem Kontrollsystem;
Verwenden einer Mehrzahl von Bodenantennenstationen an voneinander beabstandeten Stellen innerhalb des Flugplatzes oder angrenzend an diesen zwecks Kommunikation mit dem Kontrollsystem;
wobei das Kontrollsystem, während das Luftfahrzeug innerhalb des Flugplatzes in Betrieb ist, eine Betriebscharakteristik des Luftfahrzeugs nutzt, um das Luftfahrzeug zu informieren, mit welcher der Antennenstationen es kommunizieren soll, um eine Kommunikationsverbindung zwischen dem Luftfahrzeug und dem Kontrollsystem aufrechtzuerhalten bei gleichzeitiger Verringerung einer Häufigkeit, mit der das Luftfahrzeug zwischen verschiedenen der Antennenstationen umschalten muss, während sich das Luftfahrzeug innerhalb des Flugplatzes bewegt.

20. Verfahren nach Anspruch 19, das weiterhin umfasst:
a) Verwenden der Mehrzahl von Bodenantennenstationen, jede angeordnet an festen Orten innerhalb des Flugplatzbereichs, um jeweils eine Identifikation zu senden;
b) Verwenden einer auf dem Luftfahrzeug befindlichen Kommunikationskomponente, um die Bakensignale zu empfangen und um eine erste der Antennenstationen auszuwählen, um eine Kommunikationsverbindung mit dem Kontrollsystem herzustellen, während das Luftfahrzeug innerhalb des Flugplatzgebiets in Betrieb ist;
c) Verwenden des Kontrollsystems, um mit jeder der Antennenstationen zu kommunizieren und um zumindest entweder Fortbewegungsgeschwindigkeit oder Fortbewegungsrichtung des Luftfahrzeugs innerhalb des Flugplatzgebiets zu überwachen;
d) Verwenden des Kontrollsystems, um in Schritt c) erhaltene Informationen zu analysieren, um zu bestimmen, wann das Luftfahrzeug vom Kommunizieren mit der ersten der Antennenstationen zu einer anderen der Antennenstationen umschalten sollte, um eine optimale Kommunikationsverbindung aufrechtzuerhalten während des Bewegens innerhalb des Flugplatzgebiets; und
e) Unterweisen der Kommunikationskomponente, in Echtzeit, welche der Antennenstationen sie verwenden soll, um die Kommunikationsverbindung so aufrechtzuerhalten, dass eine Häufigkeit verringert wird, mit der die Kommunikationskomponente von einer Antennenstation zu einer anderen umschalten muss.

21. Verfahren nach Anspruch 19, das weiterhin umfasst:
Verwenden zumindest einer der Bodenantennenstationen, um ein Identifikationssignal zu senden;
Verwenden der auf dem Luftfahrzeug befindlichen Kommunikationskomponente, um das Identifikationssignal zu empfangen und um eine Kommunikationsverbindung mit dem Kontrollsystem via die eine der Antennenstationen herzustellen, während sich das Luftfahrzeug innerhalb des Flugplatzgebiets fortbewegt;
Verwenden des Kontrollsystems, um sich auf das Luftfahrzeug beziehende Positionsinformationen zu analysieren, während sich das Luftfahrzeug innerhalb des Flugplatzbereichs bewegt;
Verwenden des Kontrollsystems, um zu bestimmen, wann die Kommunikationskomponente von der einen Antennenstation zu einer anderen der Antennenstationen umschalten sollte, um eine optimale Kommunikationsverbindung mit der Kommunikationskomponente aufrechtzuerhalten bei gleichzeitiger Minimierung einer Anzahl von Malen, die das Umschalten zwischen verschiedenen der Antennenstationen erfolgt; und
Verwenden des Kontrollsystems, um die Kommunikationskomponente, via zumindest eine der Antennenstationen, zu informieren, zu welcher der Antennenstationen sie umschalten soll, um die Kommunikationsverbindung aufrechtzuerhalten.

22. Verfahren nach Anspruch 20 oder 21, wobei ein System nach einem der Ansprüche 1 - 18 eingesetzt wird.

23. Verfahren nach Anspruch 20 oder 21, wobei das Kontrollsystem Multilateration nutzt, um zumindest eine annähernde Fortbewegungsrichtung des Luftfahrzeugs periodisch zu bestimmen.

## Revendications

1. Système de gestion de la communication entre un avion opérant au sein d'un terrain d'aviation et une station de communication, le système comprenant:
un système de commande pour gérer les communications au sein dudit terrain d'aviation;
un composant de communication de plate-forme mobile placé sur ledit avion pour communiquer avec ledit système de commande;
une pluralité d'antennes situées en des emplacements écartés les uns des autres au sein dudit terrain d'aviation ou à proximité de celui-ci, chacune desdites antennes étant en communication avec ledit système de commande; et
dans lequel ledit système de commande est adapté pour utiliser une caractéristique fonctionnelle dudit avion tandis que ledit avion opère au sein dudit terrain d'aviation pour informer ledit avion de celle desdites antennes avec laquelle communiquer pour maintenir une liaison de communication entre ledit avion et ledit système de commande tout en réduisant la fréquence avec laquelle ledit avion doit passer d'une antenne à une autre parmi les différentes antennes tandis que ledit avion se déplace au sein dudit terrain d'aviation.

2. Système selon la revendication 1, dans lequel ladite caractéristique fonctionnelle comprend des informations de position en temps réel dudit avion.

3. Système selon la revendication 1 ou 2, comprenant:
au moins une antenne située sur ledit avion; et
un composant au sol comprenant:
ladite pluralité d'antennes situées en des emplacements écartés les uns des autres au sein dudit terrain d'aviation ou à proximité de celui-ci; et
ledit système de commande étant en communication avec lesdites antennes;
dans lequel ledit système de commande analyse les informations de localisation reçues par au moins l'une desdites antennes et choisit une antenne spécifique que ledit composant de communication de plate-forme mobile doit utiliser pour communiquer avec un réseau disposé au niveau dudit terrain d'aviation, ledit choix étant effectué en se fondant au moins en partie sur des informations de localisation en temps réel relatives audit avion.

4. Système selon la revendication 3, dans lequel lesdites informations de localisation sont fournies audit système de commande par ledit avion.

5. Système selon la revendication 3 ou 4, dans lequel lesdites informations de localisation sont dérivées par ledit système de commande par des techniques de multilatération dans lesquelles des récepteurs radio sont utilisés pour capter des impulsions transmises par un transpondeur d'un avion.

6. Système selon la revendication 3, 4 ou 5, dans lequel lesdites informations de localisation sont dérivées d'informations GPS et fournies audit système de commande par ledit composant de communication de plate-forme mobile.

7. Système selon l'une quelconque des revendications 3 à 6, dans lequel ledit choix est encore effectué en tenant compte de la charge d'au moins une paire desdites antennes.

8. Système selon l'une quelconque des revendications 1 à 7, dans lequel chacune desdites antennes comprend une sous-station d'antenne composée d'au moins une antenne directionnelle et d'une antenne omni-directionnelle.

9. Système selon l'une quelconque des revendications 3 à 8, dans lequel ledit composant au sol comprend en outre une station pivot pour faciliter la communication entre lesdites antennes et ledit système de commande.

10. Système selon l'une quelconque des revendications 3 à 9, dans lequel chacune desdites antennes émet un signal de balise unique, et dans lequel ledit composant de communication de plate-forme mobile choisit tout d'abord celui desdits signaux de balise présentant l'intensité de signal la plus forte pour établir une liaison de communication avec ledit composant au sol.

11. Système selon l'une quelconque des revendications 3 à 9, dans lequel ledit système de commande utilise en outre des informations relatives à une direction de déplacement dudit avion pour effectuer ledit choix.

12. Système selon la revendication 3, dans lequel ledit système de commande utilise lesdites informations de localisation et une direction de déplacement dudit avion pour déterminer avec laquelle desdites antennes communiquer et pour donner l'instruction audit avion de passer de l'une desdites antennes à une autre tout en minimisant le nombre de changements entre lesdites antennes tandis que ledit avion se déplace au sein dudit terrain d'aviation, et en maintenant une liaison de communication radio optimale entre ledit avion et ledit composant au sol.

13. Système selon l'une quelconque des revendications 1 à 12, dans lequel ledit avion comprend des première et seconde antennes radio fonctionnant chacune à une fréquence différente.

14. Système selon l'une quelconque des revendications 1 à 13, dans lequel chacune desdites antennes comprend une sous-station d'antenne comprenant des première et seconde antennes fonctionnant à des fréquences différentes.

15. Système selon l'une quelconque des revendications 1 à 14, dans lequel la vitesse de déplacement de l'avion est utilisée par le système de commande.

16. Système selon l'une quelconque des revendications 1 à 15, dans lequel l'une au moins desdites antennes est utilisée pour informer ledit avion de celle desdites antennes à laquelle il doit passer pour communiquer.

17. Système selon l'une quelconque des revendications 8 à 16, dans lequel lesdites antennes directionnelles desdites sous-stations d'antenne sont dirigées de telle manière que le faisceau d'antenne associé de chacune d'elles soit écarté des autres.

18. Système selon l'une quelconque des revendications 1 à 17, dans lequel chacune desdites antennes émet un signal de balise l'identifiant auprès dudit composant de communication.

19. Procédé de gestion de communication entre un avion opérant au sein d'un terrain d'aviation et une station de communication, le procédé comprenant:
l'utilisation d'un système de commande pour gérer les communications au sein dudit terrain d'aviation;
l'utilisation d'un composant de communication de plate-forme mobile placé sur ledit avion pour communiquer avec ledit système de commande;
l'utilisation d'une pluralité de stations d'antenne au sol situées en des emplacements écartés les uns des autres au sein dudit terrain d'aviation ou à proximité de celui-ci, pour communiquer avec ledit système de commande;
ledit système de commande utilisant une caractéristique fonctionnelle dudit avion tandis que ledit avion opère au sein dudit terrain d'aviation pour informer ledit avion de celle desdites stations d'antenne avec laquelle communiquer pour maintenir une liaison de communication entre ledit avion et ledit système de commande tout en réduisant une fréquence avec laquelle ledit avion doit passer d'une station d'antenne à une autre tandis que ledit avion se déplace au sein dudit terrain d'aviation.

20. Procédé selon la revendication 19, comprenant en outre:
a) l'utilisation d'une pluralité de stations d'antenne au sol, chacune étant disposée en des emplacements fixes au sein du terrain d'aviation, et émettant chacune une identification;
b) l'utilisation d'un composant de communication situé sur ledit avion pour recevoir lesdits signaux de balise et pour choisir une station initiale parmi lesdites stations d'antenne qui établira une liaison de communication avec ledit système de commande tandis que ledit avion opère au sein dudit terrain d'aviation;
c) l'utilisation dudit système de commande pour communiquer avec chacune desdites stations d'antenne et pour surveiller la vitesse de déplacement et/ou la direction de déplacement dudit avion au sein dudit terrain d'aviation;
d) l'utilisation dudit système de commande pour analyser les informations obtenues à l'étape c) pour déterminer le moment auquel ledit avion, pour communiquer, devrait passer de ladite station d'antenne initiale parmi lesdites stations d'antenne à une différente station d'antenne parmi lesdites stations d'antenne pour maintenir une liaison de communication optimale pendant qu'il se déplace au sein dudit terrain d'aviation; et
e) la fourniture d'instructions auprès dudit composant de communication, en temps réel, relativement à celle desdites stations d'antenne qu'il y a lieu d'utiliser pour maintenir ladite liaison de communication de manière permettant de réduire la fréquence avec laquelle ledit composant de communication doit passer de l'une desdites stations d'antenne à une autre.

21. Procédé selon la revendication 19, comprenant en outre:
l'utilisation d'au moins l'une des stations d'antenne au sol pour transmettre un signal d'identification;
l'utilisation d'un composant de communication situé sur ledit avion pour recevoir ledit signal d'identification et pour établir une liaison de communication avec ledit système de commande via ladite station d'antenne parmi lesdites stations d'antenne tandis que ledit avion se déplace au sein dudit terrain d'aviation;
l'utilisation dudit système de commande pour analyser les informations de position relatives audit avion tandis que ledit avion se déplace au sein dudit terrain d'aviation;
l'utilisation dudit système de commande pour déterminer le moment auquel ledit composant de communication devrait passer de l'une desdites stations d'antenne à une station d'antenne différente parmi lesdites stations d'antenne pour maintenir une liaison de communication optimale avec ledit composant de communication tout en minimisant le nombre de fois que le changement entre les différentes stations d'antenne se produit; et
l'utilisation du système de commande pour informer ledit composant de communication, via l'une au moins desdites stations d'antenne, de celle desdites stations d'antenne à laquelle il doit passer pour maintenir ladite liaison de communication.

22. Procédé selon la revendication 20 ou 21, dans lequel on utilise un système selon l'une quelconque des revendications 1 à 18.

23. Procédé selon la revendication 20 ou 21, dans lequel ledit système de commande utilise la multilatération pour déterminer périodiquement au moins approximativement une direction de déplacement dudit avion.
